Europäisches Patentamt

(19) European Patent Office

Office européen des brevets

(11) EP 0 929 142 A2

(12) EUROPEAN PATENT APPLICATION

(43) Date of publication:
14.07.1999 Bulletin 1999/28

(51) Int. Cl.$^6$: H02M 1/00

(21) Application number: 98830720.3

(22) Date of filing: 02.12.1998

(84) Designated Contracting States:
AT BE CH CY DE DK ES FI FR GB GR IE IT LI LU
MC NL PT SE
Designated Extension States:
AL LT LV MK RO SI

(30) Priority: 09.12.1997 IT FI970270

(71) Applicant: MAGNETEK S.p.A.
52028 Terranuova Bracciolini (AR) (IT)

(72) Inventors:
• Canova, Antonio
52025 Montevarchi, Arezzo (IT)
• Martini, David
52027 San Giovanni Valdarno, Arezzo (IT)
• Braccini, Roberto
52025 Montevarchi, Arezzo (IT)

(74) Representative:
Mannucci, Michele et al
Ufficio Tecnico Ing.A. Mannucci,
Via della Scala 4
50123 Firenze (IT)

(54) **Method for forming a capacitive element connected in a circuit with a power device, and circuit formed in this way**

(57) A description is given of a method for forming a capacitance electrically connected to a first power device having an exposed metal part, characterized in that a dielectric material (33) is placed between an exposed metal portion (21) of said first power device (7) and another point of an electronic circuit in which said first power device is connected, for example the exposed metal portion (23) of a second power device. The metal portions form part of the plates of said capacitance.

Fig.4

## Description

The present invention relates to a method for forming a capacitance in a circuit comprising at least one power device, such as a MOSFET, between said device and another point of the circuit, or between two power devices.

The present invention also relates to a circuit formed by said method.

In many electronic applications, for example in making high-frequency switching converters, it is necessary to implement resonant configurations. With these configurations it is possible to achieve "sort" switching and consequently low losses. They are based on resonance phenomena such that parasitic parameters relating to the power devices, which are typically MOS devices, are incorporated as elements of the resonant circuit.

The object of the present invention is to form capacitances of this type by a fast and economical system.

Essentially, the method according to the invention provides for the placing of a dielectric material between an exposed metal portion of a first power device (typically the heat sink of the device) and another point of an electronic circuit in which said first power device is connected, said metal portion forming part of one of the plates of said capacitance. In the case of MOSFET devices, the exposed metal part consists of the "drain" of the device, which projects from the top of it on the opposite side to the connectors, and has the function of dissipating heat.

The second point of the electronic circuit to which the capacitance is connected may be any point of the circuit. However, in a particularly advantageous embodiment of the invention the second point of connection of the capacitance consists of a metal part of a second power device similar to the first power device. This configuration is typically present in converters or other similar devices having a pair of power switches in a half-bridge configuration.

In a possible embodiment of the method according to the invention, the dielectric layer consists of the inner dielectric of a capacitor, a first plate of which is connected (for example by welding) to said exposed metal portion of said first power device, to form with this portion the plate of said capacitor. This form of embodiment permits simple and fast assembly. The capacitor may be an SMD capacitor of the "chip" or similar type. A plurality of capacitors may be arranged, typically in a parallel configuration, between the metal part of the power device and the other point of the circuit, to provide the requisite value of capacitance. When the other point of the circuit consists of the metal part of a second power device, the capacitor or capacitors are arranged with their two plates connected to the two exposed metal parts of the two power devices arranged side by side.

Alternatively, the capacitance may be formed by placing a dielectric material directly in contact with the exposed metal part of said first power device and of said other point of the circuit, for example the exposed metal part of a second power device. In this case, the dielectric material will be selected in such a way as to provide appropriate characteristics of thermal conductivity.

With the method described above, an electronic circuit is produced which comprises at least a first power device with an exposed metal part, and a capacitance between said power device and another point of said electronic circuit, characterized in that said capacitance comprises a plate comprising said exposed metal part and a dielectric material positioned between said exposed metal part and said other point of the circuit.

Further advantageous characteristics and embodiments of the method and circuit according to the invention are indicated in the attached claims.

The invention will be more clearly understood from the description and the attached drawing, which shows a practical, non-restrictive example of the invention. In the drawing,

Fig. 1 is a diagram of a converter to which the present invention can be applied,

Fig. 2 shows a first embodiment of the present invention, with a capacitor fitted between two metal parts of corresponding power devices arranged side by side;

Fig. 3 shows an SMD capacitor of the "chip" type which can be used in the implementation of the invention; and

Fig. 4 shows a second embodiment with a capacitor formed between two metal parts of corresponding power devices.

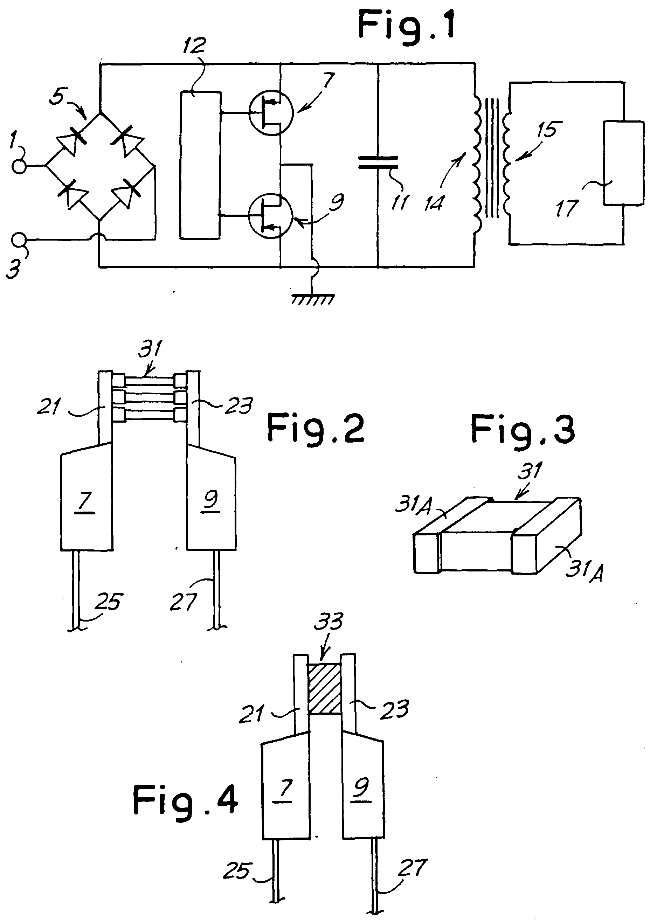

Fig. 1 shows a general view of a DC/DC converter for a high-frequency supply to a load which may, for example, consist of a discharge lamp. The circuit is known to those skilled in the art and its basic parts will therefore be referred to only in a summary way to indicate the context of the present invention. The numbers 1 and 3 indicate the connections to a power supply. The number 5 indicates a bridge rectifier which generates a rectified voltage which supplies an inverter comprising two electronic switches 7 and 9 in half-bridge configuration. The switches 7 and 9 consist of power devices, for example two MOSFETs, which are made to be alternately conducting and nonconducting by means of an integrated control circuit indicated overall by 12. The switching frequency matches the frequency of the supply to the load connected to the converter.

A capacitance 13 and an inductance 14 are connected in parallel with the half-bridge formed by the controlled switches 7 and 9. A load 17, for example a discharge lamp, is supplied through a magnetic coupling 14, 15.

The present invention suggests a new method of forming the capacitance 11 in parallel with the controlled switches 7, 9.

As shown in Fig. 2, the power devices such as those forming the switches 7 and 9 are formed for example by MOSFETs, each having a "drain" forming a metal part, indicated by 21 for the device 7 and by 23 for the device 9. The metal part 21, 23 of each device projects from the body of the device on the opposite side from the electrical connections indicated by 25, 27, and constitutes an element for dissipating the heat which develops because of the Joule effect inside the device.

According to the invention, a capacitor which constitutes the capacitance indicated by 11 in the circuit shown in Fig. 1 is formed between the two metal parts 21, 23. In the embodiment shown in Fig. 2, this capacitance is formed by three capacitors 31 of the SMD (Surface Mounted Device) type, for example multiple-layer ceramic capacitors of the "chip" type. The number of capacitors 31 connected between the two metal parts 21, 23 depends on the value of capacitance which is to be obtained and on the characteristics of the individual capacitors 31. Fig. 3 shows a perspective view of a capacitor of this type. The numbers 31A indicate the plates which are soldered to the metal parts 21, 23 and consequently form, together with these parts, the plates of the capacitance 11. It is also possible to arrange a plurality of capacitors in series, in which case the first capacitor will have one of its plates soldered to the exposed metal part of the first power device and the second plate soldered to the first plate of the next capacitor. The last capacitor of the series will have its first plate soldered to the second plate of the preceding capacitor and its second plate soldered to the exposed metal part of the second power device.

Fig. 4 shows a second embodiment of the invention. In this embodiment, the capacitance 11 is formed by a layer of dielectric material 33 interposed between the two metal parts 21, 23 of the two power devices 7 and 9, which, in this case, on their own form the plates of the capacitance 11. In this case, the capacitance 11 has a value C, found by:

$$C = \varepsilon_0 \varepsilon_r S/d$$

where

S is the surface of the plates,
d is the distance between the plates,
$\varepsilon_r$ is the dielectric constant of the dielectric material forming the layer 33 and
$\varepsilon_0$ is the dielectric constant of a vacuum.

The value of C can be adjusted by varying the thickness of the layer of dielectric material, and consequently the value "d", and/or by modifying the value of the dielectric constant $\varepsilon_r$ of the material. The dielectric material will be selected for high thermal conductivity, to permit a suitable dissipation of heat through the metal parts 21, 23.

It is to be understood that the drawing shows only an example provided solely as a practical demonstration of the invention, and that said invention may be varied in its forms and dispositions without departure from the scope of the guiding concept of the invention. The presence of any reference numbers in the attached claims has the purpose of facilitating the reading of the claims with reference to the description and to the drawing, and does not limit the scope of protection represented by the claims.

## Claims

1. A method for forming a capacitance electrically connected to a first power device having an exposed metal part, characterized in that a dielectric material is placed between an exposed metal portion of said first power device and another point of an electronic circuit in which said first power device is connected, said metal portion forming part of one of the plates of said capacitance.

2. Method according to claim 1, characterized in that said dielectric layer consists of the inner dielectric of a capacitor, a first plate of which is put into electrical contact with said exposed metal portion of said first power device, to form with the power device the plate of said capacitance.

3. Method according to claim 1 or 2, characterized in that said capacitance is formed between said first power device and an exposed metal part of a second power device forming said other point of the circuit, the exposed metal parts of said first and said second power device forming part of the plates of the capacitance.

4. Method according to claim 1 or 3, characterized in that said capacitance is formed by placing a layer of dielectric material directly in contact with the exposed metal part of at least said first power device and said other point of the circuit.

5. Method according to claim 2 and 3, characterized in that said capacitance is formed by at least one capacitor interposed between said first and said second power device, with the plates in electrical contact with the exposed metal parts of said first and said second power device.

6. Method according to claim 2 or 5, characterized in that said capacitor is a "chip" capacitor of the SMD type.

7. Method according to one or more of the preceding claims, characterized in that said exposed metal part of said first and said second power device forms a heat dissipation element.

8. An electronic circuit comprising at least a first power device with an exposed metal part, and a capacitance between said power device and another point of said electronic circuit, characterized in that said capacitance comprises a plate comprising said exposed metal part and a dielectric material placed between said exposed metal part and said other point of the circuit.

9. Electronic circuit according to claim 8, characterized in that said capacitance is placed between said first power device and a second power device, provided with a corresponding exposed metal part, the exposed metal parts of said first and said second power device forming part of the plates of said capacitance.

10. Electronic circuit according to claim 8 or 9, characterized in that said capacitance is formed by a dielectric layer directly in contact with the exposed metal part of said first and, possibly, of said second power device.

11. Electronic circuit according to claim 9, characterized in that said capacitance is formed by at least one capacitor interposed between said first and said second power device, with the plates in electrical contact with the exposed metal parts of said first and said second power device.

12. Circuit according to one or more of claims 8 to 11, characterized in that said exposed metal part of said first and said second power device forms a heat dissipation element.

13. Circuit according to claim 11, characterized in that said capacitor is a "chip" capacitor of the SMD type.

# Fig.1

# Fig.2

# Fig.3

# Fig.4